Europäisches Patentamt

European Patent Office

Office européen des brevets

(11) Veröffentlichungsnummer: **0 212 158**
**B1**

(12) **EUROPÄISCHE PATENTSCHRIFT**

(45) Veröffentlichungstag der Patentschrift: **09.05.90**

(51) Int. Cl.⁵: **G 01 B 5/20**

(21) Anmeldenummer: **86108913.4**

(22) Anmeldetag: **01.07.86**

(54) **Profilabtastvorrichtung.**

(30) Priorität: **06.07.85 DE 3524211**

(43) Veröffentlichungstag der Anmeldung:
**04.03.87 Patentblatt 87/10**

(45) Bekanntmachung des Hinweises auf die
Patenterteilung:
**09.05.90 Patentblatt 90/19**

(84) Benannte Vertragsstaaten:
**AT BE CH FR GB IT LI NL SE**

(56) Entgegenhaltungen:
**US-A-1 261 438**
**US-A-2 612 700**
**US-A-2 949 674**
**US-A-3 678 587**

**PATENT ABSTRACTS OF JAPAN, Band 6, Nr.
221 (P-153)1099r, 5. November 1982; & JP - A -
57 125 801 (NARITOMO KAWACHI) 05.08.1982**

(73) Patentinhaber: **Firma Wilhelm Bögle KG
Melanchthonstrasse 22
D-7410 Reutlingen 11-Betzingen (DE)**

(72) Erfinder: **Bögle, Normann
Melanchthonstrasse 22
D-7410 Reutlingen 11-Betzingen (DE)**

(74) Vertreter: **Möbus, Rudolf, Dipl.-Ing.
Hindenburgstrasse 65
D-7410 Reutlingen (DE)**

Courier Press, Leamington Spa, England.

EP 0 212 158 B1

**Beschreibung**

Die Erfindung betrifft ein Profilabtastvorrichtung mit einer Vielzahl von gleichen, in einem Gehäuse gegen eine Bremskraft längsverschiebbar gelagerten parallelen Abtaststäben, die auf beiden Längsseiten aus dem Gehäuse herausragen, das an seinen Enden Vorsprünge und Ausnehmungen aufweist, an welchen es mit anderen Profilabtastvorrichtungen gleicher Art verbindbar ist.

Die US—A—3 678 587 zeigt eine Profilabtastvorrichtung mit den vorstehend genannten Merkmalen, wobei mittels besonderer Verbindungsstücke, die an einem Ende des Gehäuses der Profilabtastvorrichtung anschraubbar sind, eine Koppelung der Profilabtastvorrichtung mit einer anderen Abtastvorrichtung gleicher Art möglich ist. Die gesonderten Verbindungselemente erlauben zwar eine abgewinkelte Verbindung benachbarter Vorrichtungsgehäuse, doch ist die Herstellung der Verbindung zeitraubend und umständlich, weil die gesonderten Verbindungteile, die leicht verlorengehen können, an die Gehäuseenden an- und abgeschraubt werden müssen.

Die US—A—2 612 700 zeigt eine Profilabtastvorrichtung, bei welcher mit größerem Abstand voneinander angeordnete Abtaststäbe nur nach einer Seite des Gehäuses vorstehen, dessen Gehäuse sich aber ohne Verschraubungen mit Gehäusen anderer gleicher Profilabtastvorrichtungen koppeln läßt.

Nachteilig ist aber auch dort, daß gesonderte Verbindungselemente erforderlich sind. Auch ist die Vorrichtung sehr aufwendig in ihrer Konstruktion, indem sie für jeden einzelnen Abtaststab ein gesondertes Bremselement aufweist. Nachteilig ist auch der durch die einzelnen Bremselemente bedingte größere Abstand zwischen den einzelnen Abtaststäben, wenn Kurven feinfühlig und sehr genau abgenommen werden müssen.

Der Erfindung liegt die Aufgabe zugrunde, eine Profilabtastvorrichtung der eingangs genannten Art so auszubilden, daß sie nicht nur mit anderen Vorrichtungen gleicher Art, sondern auch mit anderen Einrichtungen koppelbar und damit vielseitiger als bekannte Profilabtastvorrichtungen einsetzbar ist.

Die gestellte Aufgabe wird mit der genannten Profilabtastvorrichtung erfindungsgemäß dadurch gelöst, daß in dem aus Kunststoff gefertigten Gehäuse Abtaststabgruppen durch Gehäuseverbindungsstege voneinander getrennt sind, daß das Gehäuse auf seiner Außenseite zusätzliche Vorsprünge und Öffnungen zum Koppeln der Vorrichtung mit anderen Einrichtungen aufweist und daß das Gehäuse am einen Ende mit einem hinterschnittenen Steg als Randvorsprung und am anderen Ende mit einer hinterschnittenen, an das Profil des hinterschnittenen Steges angepaßten Nut als Randausnehmung versehen ist, dergestalt, daß eine Profilabtastvorrichtung mit ihrem Steg in die Nut einer anderen gleichen Profilabtastvorrichtung zur formschlüssigen Koppelung der beiden Vorrichtungsgehäuse in einer gemeinsamen Ebene und gegeneinander versetzbar beliebig weit einschiebbar ist.

Auch wenn das Gehäuse aus zwei Hälften zusammengesetzt ist, besteht bei der Profilabtastvorrichtung gemäß der Erfindung eine gegenseitige Abstützung der beiden Gehäusehälften durch die Gehäuseverbindungsstege, wobei die beiden Gehäusehälften vorteilhafterweise entlang der Gehäusestege durch Ultraschallschweißung fest miteinander verbunden werden können. Zwar sind auch bei der bekannten Profilabtastvorrichtung nach der US—A—2 612 700 Gehäuseverbindungsstege vorhanden, doch erfolgt durch diese Gehäuseverbindungsstege keine Gliederung der Abtaststäbe in Gruppen von dicht beieinanderliegenden Abtaststäben, die eine genaue Konturenabtastung erlauben.

Das Gehäuse der Profilabtastvorrichtung läßt sich ohne zusätzliche Verbindungsstücke rasch und einfach mit anderen gleichen Profilabtastvorrichtungen koppeln. Die zusätzlichen Vorsprünge und Öffnungen auf der Außenseite des Gehäuses erlauben auch ein Koppeln der Vorrichtung mit anderen Einrichtungen, wie Haltern, Meßeinrichtungen o. dgl. Damit ist sichergestellt, daß mit erfindungsgemäß ausgebildeten Profilabtastvorrichtungen auch breite Profile abgetastet werden können und mit Hilfe anderer Einrichtungen auch die Winkellage von Profilen gegenüber einer Bezugsebene berücksichtigt werden kann.

Vorteilhafterweise können die Gehäuseverbindungsstege zwischen den Abtaststabgruppen und auch die abtaststabfreien Enden des Gehäuses der Profilabtastvorrichtung eine dem Durchmesser der Abtaststäbe oder einem ganzzahligen Vielfachen davon entsprechende Breite aufweisen. Auf diese Weise läßt sich eine meterstabsgerechte Gliederung der Abtaststäbe und der gesamten Vorrichtung erreichen, und lassen sich bei angesetzter Vorrichtung auch die Maßverhältnisse am abgetasteten Profil erfassen.

Auf seiner zusätzliche Vorsprünge und Öffnungen zum Koppeln der Vorrichtung mit anderen Einrichtungen aufweisenden Außenseite kann die Vorrichtung auf ihrer Oberseite und/oder Unterseite eine ebene Anlagefläche aufweisen, die parallel zu der durch die Abtaststäbe gebildeten Ebene verläuft, und das Gehäuse kann vorteilhafterweise mindestens auf einer Seite der durch die Abtaststäbe gebildeten Ebene in Gehäuselängsrichtung verlaufende Durchgangsöffnungen aufweisen, in welche ein Meterstab oder eine Richtleiste zur Halterung oder Ausrichtung einschiebbar ist. Zweckmäßig kann das Gehäuse auf mindestens einer Seite der durch die Abtaststäbe gebildeten Ebene mindestens eine in Gehäuselängsrichtung und/oder quer dazu verlaufende Stecknut aufweisen, in welche Steckleisten von Haltevorrichtungen, Winkeleinstellgeräten o. dgl. eingreifen können. Das Kunststoffgehäuse hat den weiteren Vorteil, daß es das Einsetzen von Gewindebuchsen oder Gewindebolzen als auf der Oberseite und/oder Unterseite angeordnete Koppelungselemente erlaubt. Auch läßt sich das Kunststoffgehäuse für die Aufnahme von in ihrer Mitte gekröpfter und damit unverlierbar in das Gehäuse einsetzbarer Abtaststäbe ausbilden.

Nachfolgend werden Ausführungsbeispiele einer erfindungsgemäß ausgebildeten Profilabtastvorrichtung anhand der beiliegenden Zeichnung näher erläutert.

Im einzelnen zeigen:

Fig. 1 eine perspektivische Darstellung einer ersten Ausführungsform einer Profilabtastvorrichtung;

Fig. 2 eine Vorderansicht einer Profilabtastvorrichtung in gegenüber Fig. 1 vergrößerter Darstellung und teilweise abgewandelter Form;

Fig. 3 einen Querschnitt durch die Profilabtastvorrichtung entlang der Linie III—III in Fig. 2 in gegenüber Fig. 2 vergrößertem Maßstab;

Fig. 4 vier miteinander gekoppelte Profilabtastvorrichtungen;

Fig. 5 eine perspektivische Teilansicht eines zweiteiligen Gehäuses einer Profilabtastvorrichtung vor dem Zusammensetzen der beiden Gehäusehälften;

Fig. 6 eine auf einen Meterstab aufgeschobene Profilabtastvorrichtung;

Fig. 7 eine mit einer Winkelschablone besetzte Profilabtastvorrichtung;

Fig. 8 das Querschnittsprofil einer anderen Ausführungsform einer Profilabtastvorrichtung.

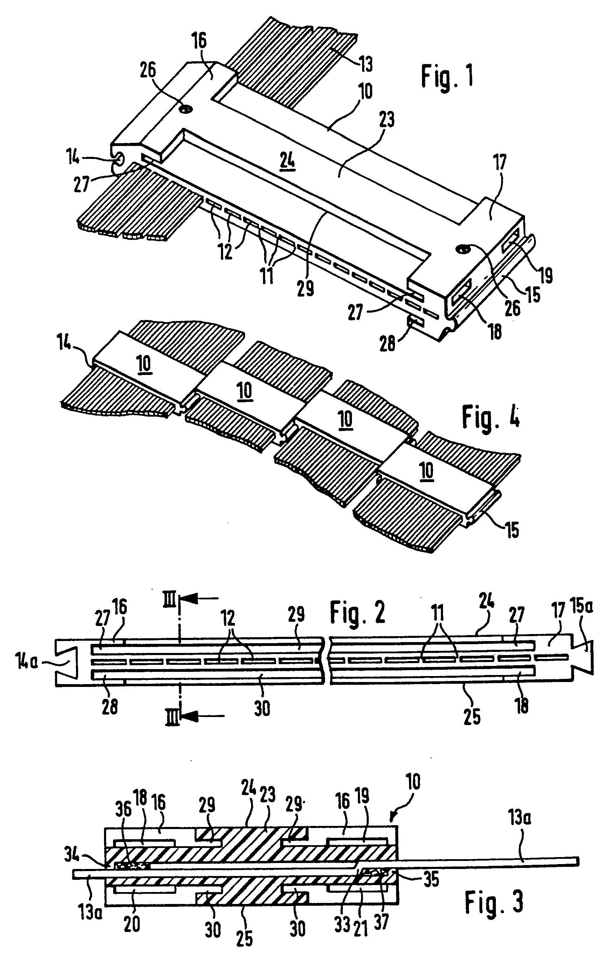

Die in Fig. 1 dargestellte Profilabtastvorrichtung weist in ihrem aus Kunststoff gefertigten Gehäuse 10 mehrere, durch Durchgangsschlitze 12 für die Aufnahme von jeweils mehreren, aus Drahtabschnitten bestehenden Abtaststäben 13 voneinander getrennte Gehäusestege 11 auf. Die Durchgangsschlitze 12 sind alle gleich breit und passend für die Aufnahme einer bestimmten Zahl von Abtaststäben 13 bemessen, beispielsweise für die Aufnahme von vier oder neun Abtaststäben, und die Gehäusestege 11 weisen eine Breite auf, die dem Durchmesser eines Abtaststabes 13 oder einem Vielfachen davon entspricht.

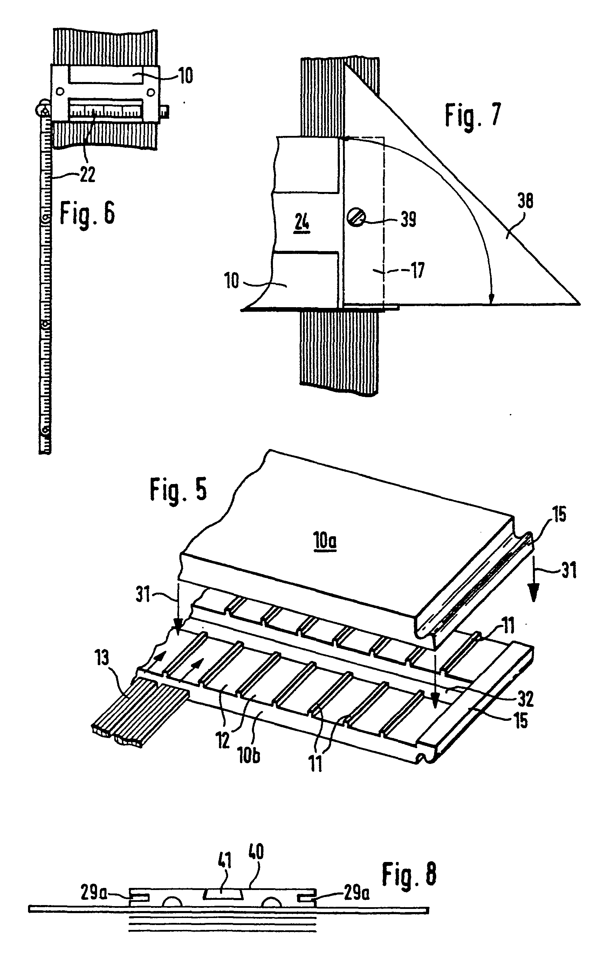

Das Gehäuse 10 ist an seinem einen Ende mit einer in seiner Mittelebene verlaufenden Quernut 14 versehen, die hinterschnittene Nuträder aufweist. Am anderen Ende ist das Gehäuse 10 in seiner Mittelebene mit einem ebenfalls hinterschnittenen Quersteg 15 versehen, dessen Profil so gestaltet ist, daß er genau in die Quernut 14 des anderen Endes paßt. Auf diese Weise lassen sich gemäß Fig. 4 mehrere Profilabtastvorrichtungen mit ihren Gehäusen fest miteinander verbinden, wobei die Gehäuse 10 miteinander fluchten oder aber gemäß Fig. 4 in Anpassung an ein abzutastendes großes und tiefes Profil auch gestaffelt zueinander angeordnet werden können. Eine fluchtende Anordnung mehrerer zusammengesteckter Profilabtastvorrichtungen läßt sich mittels eines nicht dargestellten Richtsteges bewirken, für welchen das Gehäuse zu beiden Seiten seiner Mittelebene, also in seinem oberen Teil und in seinem unteren Teil, in verstärkten Gehäuseendabschnitten 16 und 17 jeweils zwei in Längsrichtung des Gehäuses 10 verlaufende, rechteckige Öffnungen 18, 19 und 20, 21 (Fig. 3) aufweist. Durch diese Öffnungen 18—21 des Gehäuses 10 läßt sich gemäß Fig. 6 auch ein Meterstab 22 stecken. Bei der in Fig. 2 dargestellten Profilabtastvorrichtung weisen sowohl die Quernut 14a als auch der Quersteg 15a ein schwalbenschwanzförmiges Profil auf. Die Breite der ineinandergeschobenen Enden zweier Profilabtastvorrichtungen entspricht einem ganzzahligen Vielfachen des Durchmessers der Abtaststäbe 13.

Die beiden verstärkten Endabschnitte 16 und 17 des Gehäuses 10 sind auf der Oberseite und auf der Unterseite des Gehäuses jeweils durch einen gleich hohen Mittelsteg 23 miteinander verbunden. Die Gehäuseabschnitte 16, 17 und 23 weisen auf der Oberseite eine ebene und parallel zur Mittelebene des Gehäuses 10 verlaufende Außenfläche 24 und auf der Unterseite des Gehäuses 10 eine entsprechende ebene Außenfläche 25 auf. Gemäß Fig. 1 sind im Bereich der ebenen Außenfläche 24 der verstärkten Endbereiche 16 und 17 des Gehäuses 10 je eine Gewindebuchse 26 eingeformt. An deren Stelle können auch Öffnungen zur Aufnahme von Gewindebolzen treten. An den verstärkten Endbereichen 16 und 17 und am Mittelsteg 23 sind sowohl auf der Oberseite als auch auf der Unterseite des Gehäuses 10 aus Fig. 1, 2 und 3 ersichtliche, parallel zu der durch die Abtaststäbe 13 bestimmten Mittelebene des Gehäuses 10 verlaufende Stecknuten 27, 28 und 29, 30 ausgebildet. Die Stecknuten 27 und 28 verlaufen quer und die Stecknuten 29 und 30 in Längsrichtung des Gehäuses 10. Die Stecknuten sind zur Aufnahme passender Steckstege von Haltevorrichtungen o. dgl. bestimmt.

Wie Fig. 5 zeigt, kann das Gehäuse 10 aus zwei Gehäuseteilen zusammengesetzt sein, nämlich aus einem oberen Gehäuseteil 10a und aus einem unteren Gehäuseteil 10b. Bei dem dargestellten Ausführungsbeispiel sind die Gehäusestege 11 und die zwischen ihnen verlaufenden Querschlitze 12 für die Abtaststäbe 13 im unteren Gehäuseteil 10b ausgebildet, während der Quersteg 15 am einen Ende des Gehäuses jeweils hälftig vom oberen Gehäuseteil 10a und vom unteren Gehäuseteil 10b gebildet wird. Nach dem Einsetzen der Abtaststäbe 13 in den unteren Gehäuseteil 10b wird der obere Gehäusteil 10a—wie in Fig. 5 durch Pfeile 31 angedeutet—auf den Gehäuseteil 10b aufgesetzt, und anschließend werden die beiden Gehäuseteile entlang der Gehäusestege 11 und entlang des Quersteges 15 durch Ultraschallschweißen fest miteinander verbunden.

Das Innere des Gehäuses 10 kann unterschiedlich gestaltet sein. Bei dem in Fig. 5 gezeigten Ausführungsbeispiel, wo ungekröpfte geradlinige Abtaststäbe 13 verwendet werden, ist im unteren Gehäuseteil 10b eine zentrale Längsnut 32 ausgebildet, in welche ein nicht dargestellter Filzstreifen als Verschiebebremse für die Abtaststäbe 13 eingelegt wird. Fig. 3 zeigt einen Querschnitt durch ein Gehäuse 10 für Abtaststäbe 13a, die in ihrer Mitte eine Kröpfung 33 aufweisen. Auch hier ist das Gehäuse 10 in nicht näher dargestellter Weise aus zwei Gehäuseteilen zusammengesetzt. Entsprechend der Kröpfung der Abtaststäbe 13a sind die Öffnungen der Schlitze 12 auf den beiden Längsseiten des Gehäuses 10 gegeneinander versetzt, das durch Randstege 34 und 35 der beiden Gehäuseteile verursacht ist, hinter denen sich jeweils ein Filzstreifen 36 oder 37 als Bremsbelag für die Abtaststäbe 13a befindet. Durch die Kröpfung 33 und die Randstege 34, 35 können die Abtaststäbe 13a nicht aus dem Gehäuse 10 herausgeschoben werden. Die Kröpfung 33 bildet auf beiden Seiten einen Anschlag mit den Filzstreifen 36 oder 37, von denen der eine von oben und der andere von unten gegen die Abtaststäbe anliegt.

Fig. 7 zeigt den Endbereich des Gehäuses 10 einer Profilabtastvorrichtung, bei welcher auf die ebene Außenfläche 24 des verstärkten Endabschnittes 17 eine Winkelschablone 38 aufgelegt und in der dortigen Gewindebuchse 26 (Fig. 1) mittels einer Schraube 39 festgespannt ist. Gleichzeitig kann das Gehäuse 10 an einem in die Stecknuten 27, 29 oder 28, 30 eingesetzten Halter befestigt sein.

Fig. 8 zeigt das Querprofil eines Gehäuses einer Profilabtastvorrichtung, das eine durchgehend ebene Oberseite 40 mit einer zentralen schwalbenschwanzförmigen Längsnut 41 und mit zu den Längsrändern nach außen versetzten Stecknuten 29a aufweist.

## Patentansprüche

1. Profilabtastvorrichtung mit einer Vielzahl von gleichen, in einem Gehäuse gegen eine Bremskraft längsverschiebbar gelagerten parallelen Abtaststäben, die auf beiden Längsseiten aus dem Gehäuse herausragen, das an seinen Enden Vorsprünge und Ausnehmungen aufweist, an welchen es mit anderen Profilabtastvorrichtungen gleicher Art verbindbar ist, dadurch gekennzeichnet, daß in dem aus Kunststoff gefertigten Gehäuse Abtaststabgruppen durch Gehäuseverbindungsstege (11) voneinander getrennt sind, daß das Gehäuse (10) auf seiner Außenseite zusätzliche Vorsprünge und Öffnungen (26—30) zum Koppeln der Vorrichtung mit anderen Einrichtungen aufweist und daß das Gehäuse (10) am einen Ende mit einem hinterschnittenen Steg (15, 15a) als Randvorsprung und am anderen Ende mit einer hinterschnittenen, an das Profil des hinterschnittenen Steges (15, 15a) angepaßten Nut (14, 14a) als Randausnehmung versehen ist, dergestalt, daß eine Profilabtastvorrichtung mit ihrem Steg (15, 15a) in die Nut (14, 14a) einer anderen gleichen Profilabtastvorrichtung zur formschlüssigen Koppelung der beiden Vorrichtungsgehäuse in einer gemeinsamen Ebene und gegeneinander versetzbar beliebig weit einschiebbar ist.

2. Profilabtastvorrichtung nach Anspruch 1, dadurch gekennzeichnet, daß die aneinander anliegenden Abtaststäbe (13) in gleich große Gruppen unterteilt sind und die Gehäusestege (11) einen dem Durchmesser der Abtaststäbe (13) oder einem ganzzahligen Vielfachen davon entsprechende Breite aufweisen.

3. Profilabtastvorrichtung nach Anspruch 1 oder 2, dadurch gekennzeichnet, daß die Breite der ineinandergeschobenen abtaststabfreien Enden zweier Profilabtastvorrichtungen einem ganzzahligen Vielfachen des Durchmessers der Abtaststäbe (13) entspricht.

4. Profilabtastvorrichtung nach einem der Ansprüche 1—3, dadurch gekennzeichnet, daß das Gehäuse (10) auf seiner Oberseite und/oder seiner Unterseite eine ebene Außenfläche (24) aufweist, die parallel zu der durch die Abtaststäbe (13) gebildeten Mittelebene verläuft.

5. Profilabtastvorrichtung nach einem der Ansprüche 1—4, dadurch gekennzeichnet, daß das Gehäuse (10) auf mindestens einer Seite der durch die Abtaststäbe (10) gebildeten Mittelebene in Gehäuselängsrichtung verlaufende Durchgangsöffnungen (18, 19, 20, 21) aufweist, in welche ein Meterstab (22) oder eine Richtleiste einschiebbar ist.

6. Profilabtastvorrichtung nach einem der Ansprüche 1—5, dadurch gekennzeichnet, daß das Gehäuse (10) auf mindestens einer Seite der durch die Abtaststäbe (13) gebildeten Ebene mindestens eine in Gehäuselängsrichtung und/oder quer dazu verlaufende, ganz oder teilweise durchgehende Stecknut (27—30) aufweist.

7. Profilabtastvorrichtung nach einem der Ansprüche 1—6, dadurch gekennzeichnet, daß das Gehäuse (10) auf seiner Oberseite und/oder Unterseite Öffnungen mit eingesetzten Gewindebuchsen (26) oder Gewindebolzen als Koppelungselemente aufweist.

8. Profilabtastvorrichtung nach einem der Ansprüche 1—7, dadurch gekennzeichnet, daß das Gehäuse (10) aus zwei Teilen (10a, 10b) besteht, die im Bereich der die Abtaststäbe (13) gruppierenden Gehäusestege (11) durch Ultraschallschweißung miteinander fest verbunden sind.

9. Profilabtastvorrichtung nach einem der Ansprüche 1—8, dadurch gekennzeichnet, daß die Abtaststäbe (13) in ihrer Mitte gekröpft sind, die schlitzartigen Austrittsöffnungen für die Abtaststäbe (13) auf den beiden Längsseiten des Gehäuses (10) um ein durch die Kröpfung (33) bestimmtes Maß gegeneinander versetzt sind und auf eine dem Abtaststabdurchmesser entsprechende Weite begrenzt sind, und daß im Gehäuseinnern in der Nähe beider Gehäuselängsränder jeweils ein Streifen (36, 37) von Bremsmaterial angeordnet ist, von denen der Streifen am einen Längsrand von oben und der Streifen am anderen Längsrand von unten gegen die Abtaststäbe (13) anliegt (Fig. 3).

## Revendications

1. Dispositif palpeur de profil avec une pluralité de barres palpeuses semblables, disposées parallèlement dans un boîtier, coulissables longitudinalement à l'encontre d'une force de freinage, et qui dépassent des deux côtés longitudinaux du boîtier qui comporte, à ses extrémités, des saillies et des évidements par lesquels il peut être assemblé avec d'autres dispositifs palpeurs de profil de même type, caractérisé en ce que, dans le boîtier fabriqué en matière plastique, des groupes de barres palpeuses sont séparés les uns des autres par des nervures de liaison de boîtier (11), en ce que le boîtier (10) comporte, sur son côté extérieur, des saillies et des ouvertures supplémentaires (26—30) pour coupler le dispositif avec d'autres systèmes, et en ce que le boîtier (10) est muni, à une extrémité, d'une nervure en dépouille (15, 15a) en tant que saillie latérale et, à l'autre extrémité, d'une gorge en dépouille (14, 14a) adaptée au profil de la nervure en dépouille (15, 15a), en tant qu'évidement latéral, de façon qu'un dispositif palpeur de profil soit engageable à volonté avec sa nervure (15, 15a) dans la gorge (14, 14a) d'un autre dispositif palpeur de profil semblable pour solidariser les deux boîtiers de dispositif dans un plan commun et de manière décalée l'un par rapport à l'autre.

2. Dispositif palpeur de profil conforme à la revendication 1, caractérisé en ce que les barres palpeuses disposées côte à côte (13) sont divisées en groupes de même taille et les nervures de boîtier (11) présentent une largeur correspondant au diamètre des barres palpeuses (13) ou à un multiple entier de celui-ci.

3. Dispositif palpeur de profil conforme à la revendication 1 ou 2, caractérisé en ce que la largeur des extrémités, engagées les unes dans les autres et exemptes de barres palpeuses, de deux dispositifs palpeurs de profil correspond à un multiple entier du diamètre des barres palpeuses (13).

4. Dispositif palpeur de profil conforme à l'une des revendications 1 à 3, caractérisé en ce que le boîtier (10) comporte, sur son côté supérieur et/ou son côté inférieur, une surface extérieure plane (24) qui s'étend parallèlement au plan médian formé par les barres palpeuses (13).

5. Dispositif palpeur de profil conforme à l'une des revendications 1 à 4, caractérisé en ce que le boîtier (10) comporte, sur au moins un côté du plan formé par les barres palpeuses (10), des ouvertures débouchantes (18, 19, 20, 21) s'étendant dans le sens longitudinal du boîtier, dans lesquelles une branche de mètre (22) ou une baguette d'alignement peut être insérée.

6. Dispositif palpeur de profil conforme à l'une des revendications 1 à 5, caractérisé en ce que le boîtier (10) comporte, sur au moins un côté du plan formé par les barres palpeuses (13), au moins une gorge d'emboîtement totalement ou partiellement débouchante (27 à 30) s'étendant dans le sens longitudinal du boîtier et/ou transversalement à celui-ci.

7. Dispositif palpeur de profil conforme à l'une des revendications 1 à 6, caractérisé en ce que le boîtier (10) comporte, une son côté supérieur et/ou son côté inférieur, des orifices pour douilles taraudées (26) ou boulons filetés en tant qu'éléments d'accouplement.

8. Dispositif palpeur de profil conforme à l'une des revendications 1 à 7, caractérisé en ce que le boîtier (10) se compose de deux parties (10a, 10b) qui sont solidarisées l'une à l'autre par soudage aux ultrasons dans la zone des nervures de boîtier (11) groupant les barres palpeuses (13).

9. Dispositif palpeur de profil conforme à l'une des revendications 1 à 8, caractérisé en ce que les barres palpeuses (13) sont coudées en leur centre, les ouvertures de sortie en forme de fente pour les barres palpeuses (13) sur les deux côtés longitudinaux du boîtier (10) sont déportées les unes par rapport aux autres selon une mesure déterminée par le coude (33) et sont limitées à une largeur correspondant au diamètre des barres palpeuses, et en ce que, à l'intérieur du boîtier, à proximité des deux bords longitudinaux du boîtier, est disposée respectivement une bande (36, 37) en matériau de freinage, la bande près d'un bord longitudinal étant appliquée par le haut et la bande près de l'autre bord longitudinal étant appliquée par le bas contre les barres palpeuses (13) (Fig. 3).

**Claims**

1. A profile sensing device comprising a plurality of identical parallel sensing rods which are mounted in a housing so as to be longitudinally displaceable against a braking force and which jut out on both longitudinal sides from the housing, which has at its ends projections and recesses, at which it is connectable to other profile sensing devices of the same type, characterised in that in the housing, made from plastics material, groups of sensing rods are separated from one another by housing connection webs (11), in that the housing 10 has on its outside additional projections and apertures (26—30) for the coupling of the device with other mechanisms and in that the housing (10) is provided at the one end with an undercut web (15, 15a) as an edge projection and at the other end with an undercut groove (14, 14a), adapted to the profile of the undercut web (15, 15a), as an edge recess, in such a way that a profile sensing device is insertable with its web (15, 15a) to an arbitrary extent into the groove (14, 14a) of another identical profile sensing device for the form-locking coupling of the two device housings in a common plane and mutually displaceable.

2. A profile sensing device according to claim 1, characterised in that the sensing rods (13) butting against one another are subdivided into groups of the same size and the housing webs (11) have a width corresponding to the diameter of the sensing rods (13) or to an integral multiple thereof.

3. A profile sensing device according to claim 1 or 2, characterised in that the width of the telescoped sensing-rod-free ends of two profile sensing devices corresponds to an integral multiple of the diameter of the sensing rods (13).

4. A profile sensing device according to any one of claims 1 to 3, characterised in that the housing (10) has, on its upper side and/or its lower side, a plane outer surface (24) which extends parallel to the central plane formed by the sensing rods (13).

5. A profile sensing device according to any one of claims 1 to 4, characterised in that the housing (10) has, on at least one side of the central plane formed by the sensing rods (10), passage apertures (18, 19, 20, 21) which extend in the longitudinal direction of the housing and into which a meter rod (22) is insertable.

6. A profile sensing device according to any one of claims 1 to 5, characterised in that the housing (10) has, on at least one side of the plane formed by the sensing rods (13), at least one wholly or partially continuous plug-in groove (27—30) which extends in the longitudinal direction of the housing and/or transversely thereto.

7. A profile sensing device according to any one of claims 1 to 6, characterised in that the housing (10) has, on its upper side and/or lower side, apertures having inserted threaded bushes (26) or threaded bolts as coupling elements.

8. A profile sensing device according to any one of claims 1 to 7, characterised in that the housing (10) consists of two parts (10a, 10b), which are connected securely to one another by ultra-sonic welding in the region of the housing webs (11) grouping the sensing rods (13).

9. A profile sensing device according to any one of claims 1 to 8, characterised in that the sensing rods (13) are cranked in their centre, the slot-like exit apertures for the sensing rods (13) on the two longitudinal sides of the housing (10) are mutually offset by an extent determined by the cranking (33) and are limited to a width corresponding to the sensing rod diameter, and in that arranged in the interior of the housing in the vicinity of both housing longitudinal edges there is in each case a strip (36, 37) of braking material, of which the strip at the one longitudinal edge butts from above, and the strip at the other longitudinal edge butts from below, against the sensing rods (13) (Fig. 3).

Fig. 1

Fig. 4

Fig. 2

Fig. 3

Fig. 6

Fig. 7

Fig. 5

Fig. 8